# EUROPÄISCHE PATENTSCHRIFT

(11) **EP 0 952 045 B1**
(45) Veröffentlichungstag und Bekanntmachung des Hinweises auf die Patenterteilung: **11.06.2003**
(21) Anmeldenummer: 99106265.4
(22) Anmeldetag: 15.04.1999
(51) Int. Cl.: B60R 21/26

(54) **Pyrotechnisches Material enthaltende Vorrichtung sowie Verfahren zu deren Herstellung**
Pyrotechnical material containing device and method for manufacturing
Dispositif conteneur de matériau pyrotechnique et son procédé de fabrication

(30) Priorität: 20.04.1998 DE 29807096 U
(43) Veröffentlichungstag der Anmeldung: 27.10.1999
(73) Patentinhaber: TRW Occupant Restraint Systems GmbH & Co. KG, 73551 Alfdorf (DE)
(72) Erfinder: Gabriel, Wolfgang, 73553 Alfdorf (DE); Hudelmaier, Karl, 73553 Alfdorf (DE); Mödinger, Thomas, 73553 Alfdorf (DE)
(74) Vertreter: Sulzbach, Werner, Dipl.-Chem. Dr.

(56) Entgegenhaltungen:
- EP-A- 0 586 133
- EP-A- 0 658 739
- EP-A- 0 802 092
- US-A- 5 695 215

## Beschreibung

Die vorliegende Erfindung betrifft lt. Oberbegriff des Anspruch 1 eine ein pyrotechnisches Material enthaltende Vorrichtung mit einem das pyrotechnische Material umgebenden Gehäuse sowie lt. Oberbegriff des Anspruch 10, ein Verfahren zu deren Herstellung wie sie z.B. aus US-A-5 695 215 bekannt sind. Insbesondere betrifft die Erfindung einen Gasgenerator für eine Sicherheitseinrichtung in Kraftfahrzeugen oder einen Zünder für einen derartigen Gasgenerator.

Die zur Zeit auf dem Markt befindlichen Gasgeneratoren und Zünder weisen meist ein Gehäuse aus rostfreiem Stahl, Aluminium oder Kunststoff auf. Gerade bei den Zündern für Gasgeneratoren ist ein hoher Aufwand erforderlich, um diese in flüssigkeits- und gasdichter Ausführung herzustellen. In den meisten Fällen werden die Metalldurchführungen für die Anschlußkabel der Zünder in einen Metallring mit Glas eingegossen und der Metallring mittels eines Schweißverfahrens mit den übrigen Gehäuseteilen des Zünders verbunden.

Auch die Verwendung von Kunststoffgehäusen kann die gas- und flüssigkeitsdichte Ausführung des Zünders nicht immer gewährleisten. Aufgrund der Vielzahl der benötigten Verfahrensschritte ist die Herstellung der bekannten Zünder zudem äußerst kostenintensiv.

Die vorliegende Erfindung schafft eine ein pyrotechnisches Material enthaltende Vorrichtung, insbesondere einen Zünder für einen Gasgenerator, der absolut gas- und flüssigkeitsdicht ist, ein im Vergleich zu den bekannten Zündern geringeres Gewicht aufweist und aufgrund der Anwendung eines durchgängigen Fertigungsverfahrens kostengünstiger hergestellt werden kann. Erfindungsgemäß wird hierzu eine ein pyrotechnisches Material enthaltende Vorrichtung bereitgestellt, mit einem das pyrotechnische Material umgebenden Gehäuse, die dadurch gekennzeichnet ist, daß das Gehäuse aus Glas gebildet ist und wenigstens eine Metalldurchführung mit Glühdraht oder Funkenstrecke enthält.

Das pyrotechnische Material kann fest, flüssig oder gasförmig sein. Bevorzugt ist die Vorrichtung ein Zünder für einen Gasgenerator zur Verwendung in einer Sicherheitseinrichtung für Kraftfahrzeuge, der einen oder mehrere Glühdrähte oder eine Funkenstrecke zur Zündung des pyrotechnischen Materials enthält. Das pyrotechnische Material kann eine Primärladung und eine Verstärkerladung umfassen. Die Primärladung nimmt die durch die Aktivierung des Zünders mittels eines Stromimpulses entstehende Wärmeenergie in optimaler Weise auf und zündet die Verstärkerladung. Die Verstärkerladung stellt die zur Zündung des in dem Gasgenerator üblicherweise enthaltenen Treibstoffs notwendige Menge an energiereichen, heißen Partikeln bereit.

Eine besonders bevorzugte Ausführungsform der erfindungsgemäßen Vorrichtung enthält eine Einrichtung, mit der im Falle einer unerwünschten Wärmeeinwirkung von außen, beispielsweise im Falle eines Fahrzeugbrandes, eine Öffnung freigegeben und dadurch ein kontrolliertes Abströmen des durch die Selbstzündung des pyrotechnischen Materials freigesetzen Gases gewährleistet werden kann. Diese Einrichtung umfaßt bevorzugt ein bei Raumtemperatur kristallines oder flüssiges Material und ist an einer geeigneten Stelle in das Glasgehäuse der Vorrichtung eingebracht. Das kristalline oder flüssige Material verändert seine Struktur, seinen Aggregatszustand oder sein Volumen unterhalb der Selbstzündungstemperatur des pyrotechnischen Materials in einer Weise, daß die Einrichtung bei der unerwünschten Wärmeeinwirkung von außen die von der Einrichtung verschlossene Öffnung im Gehäuse der Vorrichtung freigibt.

Die Einrichtung kann insbesondere eine im Glasgehäuse der Vorrichtung gebildete Öffnung umfassen, die mit einem Dichtmittel verschlossen ist, wobei das Dichtmittel besonders bevorzugt aus einer niedrigschmelzenden Metallegierung gebildet sein kann. Ferner kann das Dichtmittel eine in einem verschlossenen Glasbehälter enthaltene Flüssigkeit sein, wobei der Glasbehälter in die Öffnung eingebracht und integral mit dem Glasgehäuse verbunden ist.

Die erfindungsgemäße Vorrichtung kann auch ein Gasgenerator für eine Sicherheitseinrichtung in Fahrzeugen sein, der insbesondere in Gurtstraffereinheiten oder Airbagmodulen verwendet werden kann.

Gegenstand der Erfindung ist ferner ein Verfahren zur Herstellung einer ein pyrotechnisches Material enthaltenden Vorrichtung, welches die folgenden Schritte umfaßt:
a) Bereitstellen eines Glaskolbens mit wenigstens einer Öffnung;
b) Einbringen des pyrotechnischen Materials und der wenigstens einen Metalldurchführung mit Funkenstrecke oder Glühdraht in den Glaskolben;
c) Verschließen der wenigstens einen Öffnung des Glaskolbens unter Ausbildung eines das pyrotechnische Material vollständig umgebenden, die Metalldurchführung enthaltenden Glasgehäuses.

In einer bevorzugten Ausführungsform des erfindungsgemäßen Verfahrens kann zunächst die Metalldurchführung mit der Funkenstrecke oder dem Glühdraht über eine erste Öffnung in den Glaskolben eingebracht, der Glaskolben im Bereich der Metalldurchführung bis zum Erweichen des Glasmaterials erwärmt und beispielsweise durch Verpressen oder Quetschen des erweichten Glases gas- und flüssigkeitsdicht verschlossen werden. Glaskolben mit eingeschmolzenen Metalldurchführungen und den zugehörigen Glühdrähten oder Funkenstrecken können auch als bereits vorgefertigte Einheiten eingesetzt werden. Danach wird dann das pyrotechnische Material über eine weitere Öffnung in den Glaskolben eingebracht und die Öffnung ebenfalls gas- und flüssigkeitsdicht verschlossen. Das Verschließen kann beispielsweise durch Abschmelzen, Verpressen oder Quetschen erfolgen. Vorzugsweise wird der Glaskolben nahe des Öffnungsbereiches bis zum Erweichen erwärmt und auseinander gezogen, um eine Verringerung des Öffnungsquerschnitts herbeizuführen und das nachfolgende Abschmelzen oder Abquetschen zu erleichtern. Besonders bevorzugt weist der Glaskolben im Bereich der weiteren Öffnung bereits eine Querschnittsverengung auf.

Das pyrotechnische Material kann zur Vermeidung einer Selbstentzündung vorher gekühlt werden. Bei Auswahl eines geeigneten Abstands zwischen dem zu erwärmenden Bereich und dem pyrotechnischen Material kann die Kühlung des pyrotechnischen Materials aufgrund der geringen Wärmeleitfähigkeit von Glas aber auch entfallen. Die so erzeugte Vorrichtung weist ein das pyrotechnische Material vollständig umgebendes integrales Glasgehäuse auf, in das die Metalldurchführungen für die Zünderanschlußkabel nach Art der bekannten Halogen-Glühlampen eingeschmolzen sind. Die Vorrichtung ist daher absolut gas- und flüssigkeitsdicht.

In einer weiteren Ausführungsform des erfindungsgemäßen Verfahrens ist die Funkenstrecke oder der Glühdraht von wenigstens einem Teil des pyrotechnischen Materials umgeben, beispielsweise in Form einer die Primärladung enthaltenden Zündpille. Die Metalldurchführung mit der Funkenstrecke oder dem Glühdraht und dem die Funkenstrecke oder den Glühdraht umgebenden Teil des pyrotechnischen Materials wird dann in einen röhrenförmigen Glaskolben eingebracht und der Glaskolben im Bereich der Metalldurchführung in der oben beschriebenen Weise verschlossen. Eine Selbstzündung des pyrotechnischen Materials wird vorzugsweise über eine geeignete Auswahl des Abstands zwischen dem pyrotechnischen Material und dem erwärmten Bereich der Öffnung verhindert. Über eine weitere Öffnung kann dem Glaskolben gegebenenfalls zusätzliches pyrotechnisches Material zugeführt und die Öffnung danach durch Abschmelzen, Verpressen oder Quetschen, wie oben beschrieben, verschlossen werden.

Darüber hinaus ist es möglich, zunächst das pyrotechnische Material und anschließend die Metalldurchführung mit der Funkenstrecke oder dem Glühdraht in den mit einer Öffnung versehenen Glaskolben einzubringen und die Öffnung dann im Bereich der Metalldurchführung in der oben beschriebenen Weise zu verschließen. Hierzu wird beispielsweise ein Glaskolben bereitgestellt, der mit dem pyrotechnischen Material gefüllt wird. Anschließend werden die mit einem Glühdraht oder einer Funkenstrecke ausgerüsteten Metalldurchführungen für die Anschlußkabel in den Glaskolben eingebracht. Der Glühdraht oder die Funkenstrecke kann auch in diesem Fall bereits von einer die Primärladung enthaltenden Zündpille umgeben sein. Danach kann der das pyrotechnische Material enthaltende Glaskolben mit Hilfe von flüssiger Luft oder Flüssigstickstoff stark abgekühlt und der Glaskolben zugeschmolzen werden. Die Kühlung kann entfallen, wenn ein geeigneter Abstand zwischen dem pyrotechnischen Material und dem erwärmten Bereich eingehalten wird. Auch dieses Verfahren gewährleistet eine absolut gas- und flüssigkeitsdichte Verbindung der Bauteile des erfindungsgemäßen Zünders.

Falls ein in einem Fahrzeug angeordneter Beschleunigungssensor einen Unfall feststellt, wird der mit dem Sensor elektrisch verbundene Zünder aktiviert. Der von dem Sensor ausgehende Stromimpuls verursacht ein Durchbrennen des Glühdrahts oder das Überspringen eines Funkens in der Funkenstrecke. Dadurch wird das pyrotechnische Material oder vorzugsweise die den Glühdraht umgebende Primärladung gezündet. Diese zündet ihrerseits die im Glaskolben enthaltene Verstärkerladung. Durch die Zündung der Primärladung und/oder der Verstärkerladung tritt eine deutliche Druckerhöhung innerhalb des Glaskolbens auf, die diesen zum Bersten bringt. Auf diese Weise können die durch das Abbrennen der Verstärkerladung freigesetzten heißen Partikel auf einen im Gasgenerator enthaltenen pyrotechnischen Treibstoff treffen und diesen zur Zündung bringen.

Die gleiche Funktionsweise tritt auf, wenn anstelle des Zünders der Gasgenerator erfindungsgemäß mit einem Glasgehäuse ausgebildet ist. In diesem Fall verursacht die Zündung des in dem Gasgenerator enthaltenen pyrotechnischen Materials eine Druckerhöhung, die das Gasgeneratorgehäuse zum Bersten bringt. Die durch den Abbrand des pyrotechnischen Materials erzeugten Heißgase werden so freigesetzt und können die Sicherheitseinrichtung, beispielsweise einen Gurtstraffer oder Airbag, betätigen.

Vorteilhafte Ausführungsformen der Erfindung ergeben sich aus der nachfolgenden Beschreibung, in der auf die beigefügte Zeichnung Bezug genommen wird. In der Zeichnung zeigen:
Figur 1 eine schematische Ansicht eines erfindungsgemäßen Zünders,
Figur 2 einen erfindungsgemäßen Zünder im Querschnitt,
Figur 3 einen erfindungsgemäßen Gasgenerator,
Figur 4 einen Zünder mit Einrichtung zum Freigeben einer Öffnung; und
Figur 5 einen Gasgenerator mit einer Einrichtung zum Freigeben einer Öffnung.
Figur 6 einen Gasgenerator mit einem erfindungsgemäßen Zünder im Querschnitt.

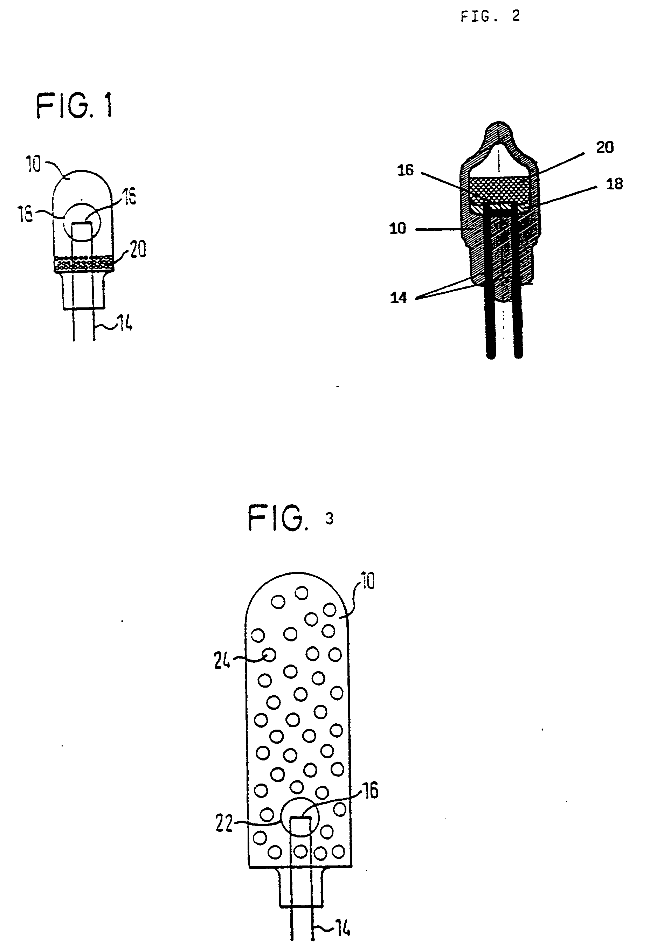

Der in den Figuren 1 und 2 gezeigte Zünder umfaßt ein Gehäuse 10 aus Glas. In den Glaskolben bzw. das Glasgehäuse 10 sind Metalldurchführungen 14 gas- und flüssigkeitsdicht eingeschmolzen. An dem in das Gehäuse hineinragenden Ende der Metalldurchführungen ist ein Glühdraht oder eine Funkenstrecke 16 angeordnet. Der Glühdraht oder die Funkenstrecke 16 ist von einer Primärladung 18 umgeben. In dem Gehäuse kann ferner noch eine Verstärkerladung 20 angeordnet sein, die die von der Primärladung 18 im Falle der Aktivierung des Zünders freigesetzte Energie aufnimmt und verstärkt.

Falls der Zünder durch einen von einem Beschleunigungssensor (hier nicht gezeigt) ausgehenden Stromimpuls aktiviert wird, zündet der Glühdraht oder die Funkenstrecke 16 zunächst die Primärladung 18, welche ihrerseits den Abbrand der Verstärkerladung 20 auslöst. Durch den Abbrand der Verstärkerladung 20 und/oder der Primärladung 18 tritt eine Druckerhöhung im Gehäuse 10 auf. Durch diese Druckerhöhung berstet das Gehäuse 10 und setzt die durch den Abbrand der Verstärkerladung gebildeten energiereichen, heißen Partikel frei.

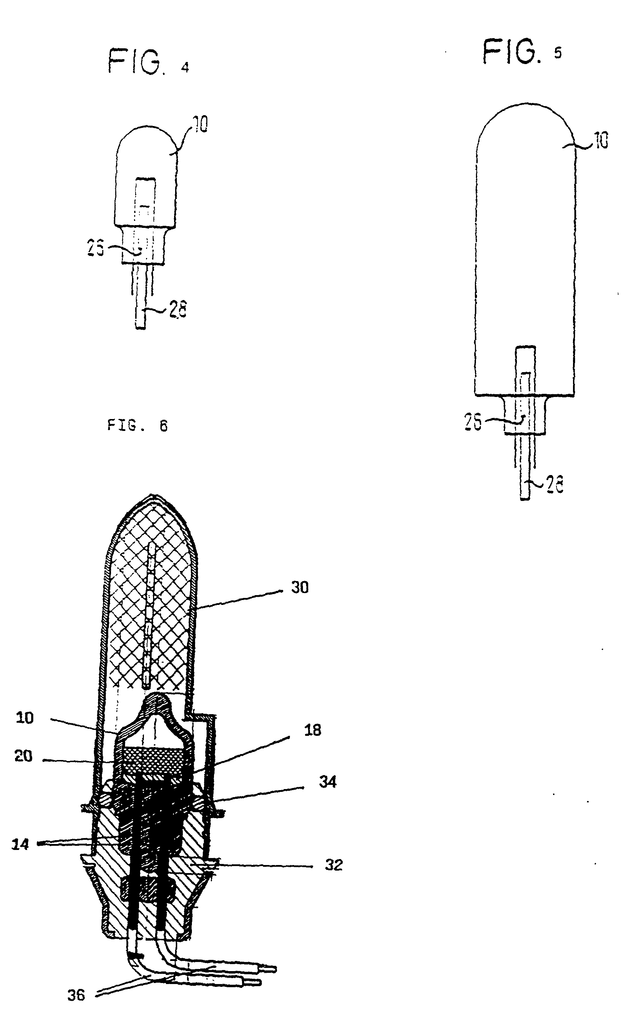

Der in Fig. 3 dargestellte Gasgenerator weist grundsätzlich den gleichen Aufbau wie der in den Figuren 1 und 2 gezeigte Zünder auf. Das Gehäuse 10 des Gasgenerators ist ebenfalls aus Glas gebildet. In den Glaskolben bzw. das Glasgehäuse 10 sind Metalldurchführungen 14 gas- und flüssigkeitsdicht eingeschmolzen, die an ihrem in den Gasgenerator hineinragenden Ende einen Glühdraht oder eine Funkenstrecke 16 aufweisen. Der Glühdraht oder die Funkenstrecke 16 sind von einer Zündpille 22 umgeben, die eine Primärladung sowie zusätzlich eine Verstärkerladung (hier nicht gezeigt) enthalten kann. In das Glasgehäuse 10 des Gasgenerators ist ferner ein Treibstoff 24 eingebracht, dessen Aktivierung zu einem Bersten des Glasgehäuses 10 und damit zu einem Freisetzen der durch den Abbrand des Treibstoffs 24 gebildeten Heißgase führt. Mit Hilfe dieser Heißgase kann eine Sicherheitseinrichtung, beispielsweise eine Gurtstraffereinheit oder ein Airbagmodul, betätigt werden.

Fig. 4 zeigt einen Zünder, der grundsätzlich den gleichen Aufbau wie der in den Figuren 1 und 2 dargestellte Zünder aufweist. In das aus Glas gebildete Zündergehäuse 10 ist bei der hier dargestellten Ausführungsform eine Öffnung 26 eingebracht, die mit einem Dichtmittel 28 verschlossen ist. Das Dichtmittel 28 hat die Eigenschaft, daß es bei einer Wärmeeinwirkung von außen unterhalb der Selbstzündungstemperatur des in den Zünder eingebrachten pyrotechnischen Materials, beispielsweise der Primärladung 18 oder der Verstärkerladung 20, seine Struktur, seinen Aggregatszustand oder sein Volumen verändert und dadurch die Öffnung 26 freigibt. Als Dichtmittel kann beispielsweise eine niedrigschmelzende Metallegierung verwendet werden. Das Freigeben der Öffnung gewährleistet, daß die infolge einer Selbstzündung des pyrotechnischen Materials entstehenden Gase kontrolliert abströmen können.

Der in Fig. 5 gezeigte Gasgenerator weist ebenfalls die in das aus Glas gebildete Gehäuse 10 eingebrachte Öffnung 26 auf. Wie oben beschrieben, ist diese Öffnung mit einem Dichtmittel 28, beispielsweise einer niedrigschmelzenden Metallegierung, verschlossen. Die Öffnung 26 bzw. das Dichtmittel 28 können an jeder beliebigen Stelle des Gehäuses 10 angeordnet sein. Es ist auch denkbar, daß eine Wärmeeinwirkung von außen und die damit verbundene Veränderung der Struktur, des Aggregatszustandes oder des Volumens des Dichtmittels nicht nur zu einem Freigeben der Öffnung 26 sondern auch zu einer teilweisen Zerstörung des Gehäuses 10 führt. Dadurch wird die für das Abströmen des infolge der Selbstzündung des Treibstoffs entstehenden Gases zur Verfügung stehende Öffnungsfläche vergrößert. Im Gehäuse 10 können auch mehrere mit dem Dichtmittel 28 verschlossene Öffnungen 26 vorgesehen sein.

Fig. 6 zeigt schließlich ein Anwendungsbeispiel für einen Gasgenerator mit einem in den Gasgenerator eingesetzten erfindungsgemäßen Zünder. Der hier gezeigte Gasgenerator umfaßt ein aus herkömmlichen Materialien wie beispielsweise Aluminium oder Stahl gebildetes Gehäuse 30 sowie ein das Gehäuse verschließendes Sockelteil 32. Das Sockelteil kann aus Kunststoff gebildet sein. In einem oberen Abschnitt des Sockelteils 32, der dem Innenraum des Gehäuses 30 zugewandt ist, ist ein O-Ring 34 angeordnet, der das Gehäuse 30 nach Art einer Rast in Position hält. Am Außenumfang des Sockelteils 32 können noch weitere Rastmittel zum Festhalten des Gehäuses vorgesehen sein.

In den oberen Teil des Sockelteils 32, zwischen den O-Ring 34, ist ferner ein erfindungsgemäßer Zünder eingesetzt. Dieser Zünder weist den gleichen Aufbau wie der in den Figuren 1 und 2 gezeigte Zünder auf, d.h. er besteht aus einem vollständig aus Glas gebildeten Gehäuse 10, in welches Metalldurchführungen 14 gas- und flüssigkeitsdicht eingeschmolzen sind. Die Metalldurchführungen 14 weisen an ihrem in das Glasgehäuse 10 des Zünders hineinragenden Ende einen Glühdraht 16 auf. Der Glühdraht kann auch in bekannter Weise durch eine Funkenstrecke ersetzt werden. Der Glühdraht 16 ist von einer Primärladung 18 umgeben, die ihrerseits mit einer Verstärkerladung 20 in Kontakt steht. An ihrem aus dem Glasgehäuse 10 austretenden Ende sind die Metalldurchführungen 14 an die Zünderanschlußkabel 36 angeschlossen.

Der in Fig. 6 gezeigte Gasgenerator kann beispielsweise in Gurtstraffereinheiten verwendet werden. Wenn der Zünder über die Zünderanschlußkabel 36 aktiviert wird, brennt der Glühdraht 16 durch und zündet so das im Glasgehäuse 10 des Zünders enthaltene pyrotechnische Material 18, 20. Die durch den Abbrand des pyrotechnischen Materials 18, 20 verursachte Druckerhöhung bringt den Glaskolben des Zünders zum Bersten und löst das Gehäuse 30 des Gasgenerators aus seiner Rastposition. Die Verschiebung des Gehäuses 30 kann über eine am Außenumfang des Gehäuses 30 angeordnete Schulter 38 in bekannter Weise auf einen Linearantrieb für einen Gurtstraffer übertragen werden.

Die Verwendung des hier dargestellten Zünders ist jedoch nicht auf Gasgeneratoren für Gurtstraffereinheiten beschränkt. Der erfindungsgemäße Zünder kann vielmehr in allen bekannten Gasgeneratoren für Sicherheitseinrichtungen eingesetzt werden, beispielsweise in Gasgeneratoren für Fahreraufprallschutzvorrichtungen, Beifahreraufprallschutzvorrichtungen und Seitenaufprallschutzvorrichtungen.

Zur Herstellung der erfindungsgemäßen Vorrichtung bzw. des erfindungsgemäßen Zünders wird bevorzugt ein Glasrohr bereitgestellt, das eine erste Öffnung und eine der ersten Öffnung gegenüberliegende zweite Öffnung aufweist. Danach werden die vorzugsweise aus Wolfram oder Wolframlegierungen bestehenden Metalldurchführungen mit dem Glühdraht oder unter Ausbildung einer Funkenstrecke über die erste Öffnung in das Glasrohr eingebracht und das Glasrohr wird im Bereich der ersten Öffnung bis zum Erweichen des Glases erwärmt und verpreßt, um die Metalldurchführungen gas- und flüssigkeitsdicht in das Glasrohr einzuschmelzen. Das Glasrohr mit den darin eingeschmolzenen Metalldurchführungen kann auch als ein vorgefertigtes Bauteil bereitgestellt werden, wie es beispielsweise aus der Fertigung von Halogen-Glühlampen bekannt ist.

Nach der Herstellung des die Metalldurchführungen enthaltenden Glasrohrs bzw. Glaskolbens wird das pyrotechnische Material über die zweite Öffnung in den Glaskolben eingebracht. Das Einbringen des pyrotechnischen Materials kann dabei in mehreren Schritten erfolgen, die von Trocknungsstufen unterbrochen sein können. Auf diese Weise lassen sich auch verschiedene pyrotechnische Materialien einbringen und eine Anpassung der Eigenschaften der Vorrichtung an den jeweils gewünschten Einsatzzweck erreichen. Schließlich wird der das pyrotechnische Material enthaltende Glaskolben im Bereich der zweiten Öffnung abgeschmolzen. Bevorzugt weist der Glaskolben in diesem Bereich bereits eine Querschnittsverengung auf, so daß das Abschmelzen durch Erwärmen und Auseinanderziehen des Glaskolbens im Bereich der Querschnittsverengung erfolgen kann. Bei dieser Verfahrensweise kann aufgrund der schlechten Wärmeleitfähigkeit von Glas auf eine Kühlung des übrigen Glaskolbens bzw. des pyrotechnischen Materials verzichtet werden.

Der erfindungsgemäße Zünder gewährleistet einen absolut gasdichten und flüssigkeitsdichten Verschluß des in ihm enthaltenen pyrotechnischen Materials und erhöht so die Funktionssicherheit des jeweiligen Gasgenerators bzw. der jeweiligen Sicherheitseinrichtung. Gleichzeitig ist durch die Anwendung eines vereinfachten und durchgängigen Fertigungsverfahren eine kostengünstige Herstellung des erfindungsgemäßen Zünders möglich.

## Patentansprüche

1. Pyrotechnisches Material enthaltende Vorrichtung, mit einem das pyrotechnische Material (18, 20; 24) umgebenden Gehäuse (10), **dadurch gekennzeichnet, daß** das Gehäuse (10) vollständig aus Glas gebildet ist, wobei das Gehäuse (10) wenigstens eine Metalldurchführung (14) mit Funkenstrecke oder Glühdraht (16) enthält.

2. Vorrichtung nach Anspruch 1, **dadurch gekennzeichnet, daß** die Vorrichtung ein Zünder für einen Gasgenerator ist.

3. Vorrichtung nach Anspruch 2, **dadurch gekennzeichnet**, der Glühdraht oder die Funkenstrecke (16) mit dem pyrotechnischen Material (18, 20; 24) in Verbindung steht.

4. Vorrichtung nach Anspruch 2 oder 3, **dadurch gekennzeichnet, daß** das pyrotechnische Material eine Primärladung (18) und eine Verstärkerladung (20) umfaßt.

5. Vorrichtung nach Anspruch 1, **dadurch gekennzeichnet, daß** die Vorrichtung ein Gasgenerator für eine Sicherheitseinrichtung in Kraftfahrzeugen ist.

6. Vorrichtung nach Anspruch 5, **dadurch gekennzeichnet, daß** die Sicherheitseinrichtung eine Gurtstraffereinheit oder ein Airbagmodul ist.

7. Vorrichtung nach einem der Ansprüche 1 bis 6, **dadurch gekennzeichnet, daß** das pyrotechnische Material (18, 20; 24) fest, flüssig oder gasförmig ist.

8. Vorrichtung nach einem der Ansprüche 1 bis 7, **dadurch gekennzeichnet, daß** das Gehäuse (10) mindestens eine Öffnung (26) aufweist, die mit einem Dichtmittel (28) verschlossen ist, wobei das Dichtmittel infolge einer Wärmeeinwirkung von außen unterhalb der Selbstentzündungstemperatur des pyrotechnischen Materials (16, 20; 24) seinen Aggregatszustand, seine Struktur oder sein Volumen so ändert, daß die Öffnung (26) freigegeben wird.

9. Vorrichtung nach Anspruch 8, **dadurch gekennzeichnet, daß** das Dichtmittel (28) eine niedrigschmelzende Metallegierung oder eine in einem verschlossenen Glasbehälter enthaltene Flüssigkeit ist, wobei der Glasbehälter in die Öffnung (26) eingebracht ist.

10. Verfahren zur Herstellung einer ein pyrotechnisches Material enthaltenden Vorrichtung, **dadurch gekennzeichnet, daß** das Verfahren die folgenden Schritte umfaßt:
a) Bereitstellen eines Glaskolbens mit wenigstens einer Öffnung;
b) Einbringen des pyrotechnischen Materials und wenigstens einer Metalldurchführung mit Funkenstrecke oder Glühdraht in den Glaskolben;
c) Verschließen der Öffnung des Glaskolbens unter Ausbildung eines das pyrotechnische Material vollständig umgebenden, die Metalldurchführung mit Funkenstrecke oder Glühdraht enthaltenden Glasgehäuses.

11. Verfahren nach Anspruch 10, **dadurch gekennzeichnet, daß** der Glaskolben im Bereich der Öffnung bis zum Erweichen des Glases erwärmt und die Öffnung durch Abschmelzen oder Verpressen verschlossen werden.

12. Verfahren nach Anspruch 11, **dadurch gekennzeichnet, daß** das pyrotechnische Material während des Erwärmens gekühlt wird.

13. Verfahren nach Anspruch 11, **dadurch gekennzeichnet, daß** der erwärmte Bereich des Glaskolbens in einem Abstand zu dem pyrotechnischen Material angeordnet ist, wobei der Abstand so gewählt ist, daß eine Kühlung des pyrotechnischen Materials entfallen kann.

14. Verfahren nach einem der Ansprüche 10 bis 13, **dadurch gekennzeichnet, daß** der Glaskolben im Bereich der Öffnung eine Querschnittsverengung aufweist.

15. Verfahren nach Anspruch 14, **dadurch gekennzeichnet, daß** der Glaskolben im Bereich der Querschnittsverengung erwärmt, auseinandergezogen und abgeschmolzen wird.

16. Verfahren nach einem der Ansprüche 10 bis 15, **dadurch gekennzeichnet, daß** vor dem Einbringen des pyrotechnischen Materials die Metalldurchführung mit der Funkenstrecke oder dem Glühdraht in den Glaskolben eingebracht und der Glaskolben im Bereich der Metalldurchführung verschlossen wird.

17. Verfahren nach einem der Ansprüche 10 bis 15, **dadurch gekennzeichnet, daß** wenigstens ein Teil des pyrotechnischen Materials die Funkenstrecke oder den Glühdraht umgibt, die Metalldurchführung mit der Funkenstrecke oder dem Glühdraht und dem die Funkenstrecke oder den Glühdraht umgebenden Teil des pyrotechnischen Materials in den Glaskolben eingebracht und der Glaskolben im Bereich der Metalldurchführung verschlossen wird.

18. Verfahren nach einem der Ansprüche 10 bis 15, **dadurch gekennzeichnet, daß** das pyrotechnische Material in den Glaskolben eingebracht wird, daß anschließend die Metalldurchführung mit der Funkenstrecke oder dem Glühdraht in den Glaskolben eingebracht und der Glaskolben im Bereich der Metalldurchführung verschlossen wird.

19. Verfahren nach einem der Ansprüche 10 bis 15, **dadurch gekennzeichnet, daß** der Glaskolben ein Glasrohr mit einer ersten Öffnung und einer der ersten Öffnung gegenüberliegenden zweiten Öffnung ist, daß die Metalldurchführung mit der Funkenstrecke oder dem Glühdraht über die erste Öffnung in das Glasrohr eingebracht und das Glasrohr im Bereich der ersten Öffnung bis zum Erweichen erwärmt und verschlossen wird und daß anschließend das pyrotechnische Material über die zweite Öffnung in das Glasrohr eingebracht und das Glasrohr im Bereich der zweiten Öffnung bis zum Erweichen erwärmt und verschlossen wird.

20. Verfahren nach Anspruch 19, **dadurch gekennzeichnet, daß** die Querschnittsverengung im Bereich der zweiten Öffnung angeordnet ist.

21. Verfahren nach Anspruch 19 oder 20, **dadurch gekennzeichnet, daß** der durch Einbringen der Metalldurchführungen und Verschließen der ersten Öffnung erhältliche Glaskolben als ein vorgefertigtes Bauteil bereitgestellt wird.

22. Verwendung einer ein pyrotechnisches Material enthaltenen Vorrichtung gemäß Anspruch 1 als Zünder in einem Gasgenerator für eine Sicherheitseinrichtung in Kraftfahrzeugen.

23. Verwendung eines vorgefertigten Bauteils in einem Verfahren zur Herstellung einer pyrotechnischen Vorrichtung gemäß den Ansprüchen 10 bis 20, wobei das vorgefertigte Bauteil dadurch erhältlich ist, daß ein rohrfömiger Glaskolben mit einer ersten Öffnung und einer der ersten Öffnung gegenüberliegenden zweiten Öffnung bereitgestellt wird, daß wenigstens eine Metalldurchführung mit einer Funkenstrecke oder einem Glühdraht über die erste Öffnung in den Glaskolben eingebracht und der Glaskolben im Bereich der ersten Öffnung bis zum Erweichen erwärmt und verpreßt wird.

## Claims

1. A device containing a pyrotechnic material, comprising a housing (10) surrounding the pyrotechnic material (18, 20; 24), **characterized in that** the housing (10) is formed entirely from glass, the housing (10) containing at least one metal duct (14) comprising a spark gap or a heating wire (16).

2. The device according to claim 1, **characterized in that** the device is an igniter for a gas generator.

3. The device according to claim 2, **characterized in that** the heating wire or the spark gap (16) is in contact with the pyrotechnic material (18, 20; 24).

4. The device according to claim 2 or 3, **characterized in that** the pyrotechnic material comprises a primary charge (18) and a booster charge (20).

5. The device according to claim 1, **characterized in that** the device is a gas generator for a safety arrangement in motor vehicles.

6. The device according to claim 5, **characterized in that** the safety arrangement is a belt tensioner unit or an airbag module.

7. The device according to any of claims 1 to 6, **characterized in that** the pyrotechnic material (18, 20; 24) is solid, liquid or gaseous.

8. The device according to any of claims 1 to 7, **characterized in that** the housing (10) has at least one opening (26) which is closed by a sealing means (28), the sealing means altering its physical condition, its structure or its volume as a result of an action of heat from the exterior below the self-ignition temperature of the pyrotechnic material (16, 20; 24) in such a way that the opening (26) is exposed.

9. The device according to claim 8, **characterized in that** the sealing means (28) is a low-melting-point metal alloy or a liquid contained in a closed glass container, the glass container being introduced into the opening (26).

10. A method of manufacturing a device containing a pyrotechnic material, **characterized in that** the method comprises the steps of:
(a) providing a glass bulb having at least one opening;
(b) introducing the pyrotechnic material and at least one metal duct comprising a spark gap or a heating wire into the glass bulb;
(c) closing the opening of the glass bulb forming a glass housing completely surrounding the pyrotechnic material and containing the metal duct comprising the spark gap or the heating wire.

11. The method according to claim 10, **characterized in that** the glass bulb is heated in the region of the opening until the glass softens, and the opening is closed by sealingly melting or pressing.

12. The method according to claim 11, **characterized in that** the pyrotechnic material is cooled during heating.

13. The method according to claim 11, **characterized in that** the heated area of the glass bulb is arranged at a distance from the pyrotechnic material, the distance being selected such that a cooling of the pyrotechnic material may be dispensed with.

14. The method according to any of claims 10 to 13, **characterized in that** the glass bulb has a narrowed cross-section in the region of the opening.

15. The method according to claim 14, **characterized in that** the glass bulb is heated, pulled apart and sealingly melted in the region of the narrowed cross-sectional portion.

16. The method according to any of claims 10 to 15, **characterized in that** prior to introducing the pyrotechnic material, the metal duct comprising the spark gap or the heating wire is introduced into the glass bulb and the glass bulb is closed in the region of the metal duct.

17. The method according to any of claims 10 to 15, **characterized in that** at least part of the pyrotechnic material surrounds the spark gap or the heating wire, the metal duct comprising the spark gap or the heating wire and the part of the pyrotechnic material surrounding the spark gap or the heating wire is introduced into the glass bulb and the glass bulb is closed in the region of the metal duct.

18. The method according to any of claims 10 to 15, **characterized in that** the pyrotechnic material is introduced into the glass bulb and that subsequently the metal duct comprising the spark gap or the heating wire is introduced into the glass bulb and the glass bulb is closed in the region of the metal duct.

19. The method according to any of claims 10 to 15, **characterized in that** the glass bulb is a glass tube having a first opening and a second opening located opposite the first opening, that the metal duct comprising the spark gap or the heating wire is introduced into the glass tube through the first opening and the glass tube, in the region of the first opening, is heated up to softening and is closed and that subsequently the pyrotechnic material is introduced into the glass tube through the second opening and the glass tube, in the region of the second opening, is heated up to softening and is closed.

20. The method according to claim 19, **characterized in that** the narrowed cross-sectional portion is arranged in the region of the second opening.

21. The method according to claim 19 or claim 20, **characterized in that** the glass bulb obtainable by introducing the metal ducts and closing the first opening is provided as a prefabricated component.

22. Use of a device containing a pyrotechnic material according to claim 1 as an igniter in a gas generator for a safety arrangement in motor vehicles.

23. Use of a prefabricated component in a method of manufacturing a device containing a pyrotechnic material according to claim 10 to 20, the prefabricated component being obtainable in that there is provided a tubular glass bulb having a first opening and a second opening located opposite the first opening, that at least one metal duct comprising a spark gap or a heating wire is introduced into the glass tube through the first opening and that the glass bulb, in the region of the first opening, is heated up to softening and is closed by pressing.

## Revendications

1. Dispositif contenant du matériau pyrotechnique, comportant un boîtier (10) entourant le matériau pyrotechnique (18, 20 ; 24), **caractérisé en ce que** le boîtier (10) est formé entièrement en verre, le boîtier (10) contenant au moins une traversée de métal (14) avec éclateur à étincelle ou filament incandescent (16).

2. Dispositif selon la revendication 1, **caractérisé en ce que** le dispositif est un allumeur pour un générateur de gaz.

3. Dispositif selon la revendication 2, **caractérisé en ce que** le filament incandescent ou l'éclateur à étincelle (16) est en liaison avec le matériau pyrotechnique (18, 20 ; 24).

4. Dispositif selon la revendication 2 ou 3, **caractérisé en ce que** le matériau pyrotechnique est une charge primaire (18) et comprend une charge d'amplification (20).

5. Dispositif selon la revendication 1, **caractérisé en ce que** le dispositif est un générateur de gaz pour un système de sécurité dans des véhicules automobiles.

6. Dispositif selon la revendication 5, **caractérisé en ce que** le système de sécurité est un ensemble de tendeur de ceinture ou un module d'airbag.

7. Dispositif selon l'une des revendications 1 à 6, **caractérisé en ce que** le matériau pyrotechnique (18, 20 ; 24) est solide, liquide ou gazeux.

8. Dispositif selon l'une des revendications 1 à 7, **caractérisé en ce que** le boîtier (10) présente au moins une ouverture (26) qui est fermée par un moyen d'étanchéité (28), le moyen d'étanchéité changeant, à la suite d'une action de la chaleur de l'extérieur, inférieure à la température d'auto-allumage du matériau pyrotechnique (16, 20 ; 24), son état physique, sa structure et son volume de telle sorte que l'ouverture (26) est libérée.

9. Dispositif selon la revendication 8, **caractérisé en ce que** le moyen d'étanchéité (28) est un alliage métallique à bas point de fusion ou un liquide contenu dans un récipient de verre fermé, le récipient de verre étant introduit dans l'ouverture (26).

10. Procédé de fabrication d'un dispositif contenant un matériau pyrotechnique, **caractérisé en ce que** le procédé comprend les étapes suivantes :
a) fourniture d'une ampoule de verre avec au moins une ouverture ;
b) introduction du matériau pyrotechnique et d'au moins une traversée de métal avec éclateur à étincelle ou filament incandescent dans l'ampoule de verre ;
c) fermeture de l'ouverture de l'ampoule de verre en formant un boîtier de verre entourant totalement le matériau pyrotechnique et contenant la traversée de métal avec éclateur à étincelle ou filament incandescent.

11. Procédé selon la revendication 10, **caractérisé en ce que** l'ampoule de verre est chauffée dans la région de l'ouverture jusqu'à ce que le verre soit ramolli et que l'ouverture soit fermée par scellement ou par compression.

12. Procédé selon la revendication 11, **caractérisé en ce que** le matériau pyrotechnique est refroidi pendant le réchauffement.

13. Procédé selon la revendication 11, **caractérisé en ce que** la région chauffée de l'ampoule de verre est agencée à distance du matériau pyrotechnique, la distance étant choisie telle qu'un refroidissement du matériau pyrotechnique peut être annulé.

14. Procédé selon l'une des revendications 10 à 13, **caractérisé en ce que** l'ampoule de verre présente un rétrécissement de section transversale dans la région de l'ouverture.

15. Procédé selon la revendication 14, **caractérisé en ce que** l'ampoule de verre est chauffée, étirée et scellée dans la région du rétrécissement de section transversale.

16. Procédé selon l'une des revendications 10 à 15, **caractérisé en ce qu'**avant d'introduire le matériau pyrotechnique, la traversée de métal avec l'éclateur à étincelle ou le filament incandescent est introduite dans l'ampoule de verre, et l'ampoule de verre est fermée dans la région de la traversée de métal.

17. Procédé selon l'une des revendications 10 à 15, **caractérisé en ce qu'**au moins une partie du matériau pyrotechnique entoure l'éclateur à étincelle ou le filament incandescent, la traversée de métal, avec l'éclateur à étincelle ou le filament incandescent et avec la partie du matériau pyrotechnique qui entoure l'éclateur à étincelle ou le filament incandescent, est introduite dans l'ampoule de verre, et l'ampoule de verre est fermée dans la région de la traversée de métal.

18. Procédé selon l'une des revendications 10 à 15, **caractérisé en ce que** le matériau pyrotechnique est introduit dans l'ampoule de verre, **en ce qu'**ensuite, la traversée de métal avec l'éclateur à étincelle ou le filament incandescent est introduite dans l'ampoule de verre, et l'ampoule de verre est fermée dans la région de la traversée de métal.

19. Procédé selon l'une des revendications 10 à 15, **caractérisé en ce que** l'ampoule de verre est un tube de verre avec une première ouverture et une deuxième ouverture opposée à la première ouverture, **en ce que** la traversée de métal avec l'éclateur à étincelle ou le filament incandescent est introduite dans le tube de verre, et le tube de verre est chauffé dans la région de la première ouverture jusqu'à ce qu'il soit ramolli et fermé, et **en ce qu'**ensuite, le matériau pyrotechnique est introduit dans le tube de verre via la deuxième ouverture, et le tube de verre est chauffé dans la région de la première ouverture jusqu'à ce qu'il soit ramolli et fermé.

20. Procédé selon la revendication 19, **caractérisé en ce que** le rétrécissement de section transversale est agencé dans la région de la deuxième ouverture.

21. Procédé selon la revendication 19 ou 20, **caractérisé en ce que** l'ampoule de verre obtenue en introduisant les traversées de métal et en fermant la première ouverture est fournie sous forme de composant préfabriqué.

22. Utilisation d'un dispositif contenant un matériau pyrotechnique selon la revendication 1, servant d'allumeur dans un générateur de gaz pour un système de sécurité dans des véhicules automobiles.

23. Utilisation d'un composant préfabriqué dans un procédé de fabrication du dispositif pyrotechnique selon les revendications 10 à 20, le composant préfabriqué pouvant être obtenu en fournissant une ampoule de verre de forme tubulaire avec une première ouverture et une deuxième ouverture opposée à la première ouverture, en introduisant au moins une traversée de métal avec un éclateur à étincelle ou un filament incandescent dans l'ampoule de verre via la première ouverture et en chauffant et comprimant l'ampoule de verre dans la région de la première ouverture, jusqu'à ce qu'elle soit ramollie.
